# EUROPEAN PATENT SPECIFICATION

(11) **EP 1 797 707 B1**
(45) Date of publication and mention of the grant of the patent: **24.02.2010**
(21) Application number: 05779378.8
(22) Date of filing: 08.09.2005
(51) Int. Cl.: H04N 1/32

(54) **PLACE NAME PICTURE ANNOTATION ON CAMERA PHONES**
ORTSNAMVERMELDUNGABBILDUNG AUF EINEM MOBIELTELEFON MIT KAMERA
ANNOTATION D'UN NOM DE LIEU SUR UNE IMAGE PRESENTEE SUR DES TELEPHONES-APPAREILS PHOTO

(30) Priority: 10.09.2004 NO 20043813
(43) Date of publication of application: 20.06.2007
(73) Proprietor: Telenor ASA, 1331 Fornebu (NO)
(72) Inventor: CALVET, Juan, Carlos, Lopez, N-0768 OSLO (NO); MALM, Pål, Sigurd, N-3400 LIER (NO)
(74) Representative: Onsagers Ltd
(86) International application number: PCT/NO2005/000324
(87) International publication number: WO 2006/028383

(56) References cited:
- US-A1- 2002 113 757
- US-A1- 2004 068 368
- US-B1- 6 397 334
- US-B1- 6 462 778
- US-B1- 6 542 819
- US-B1- 6 657 661
- PATENT ABSTRACTS OF JAPAN vol. 2003, no. 04, 2 April 2003 (2003-04-02) & JP 2002 352218 A (OLYMPUS OPTICAL CO LTD), 6 December 2002 (2002-12-06)
- PATENT ABSTRACTS OF JAPAN vol. 2003, no. 12, 5 December 2003 (2003-12-05) & JP 2005 086265 A (HITACHI LTD), 31 March 2005 (2005-03-31)

## Description

### Technical field

The present invention describes a method for annotating pictures generated on a camera phone with a place name by taking advantage of the location information from the phone's corresponding cellular network.

A cellular network has location registers to address subscribers and provide network intelligence. A cellular telephone can retrieve indication of location from its network. In this way, a camera phone (a cellular telephone with a digital camera) can automatically add meaningful place names to its pictures.

### Technical background

The last year we have seen a massive growth in camera-enabled phones, with 15 per cent of handsets worldwide featuring built-in cameras or designated camera accessories. The ARC Group study into the future of mobile handsets predicts that by 2005, 130 million handsets with camera capability will be shipped globally, and with the additional boost of 3G roll out, this figure is expected to increase to 210 million by 2008. Globally, the Asia Pacific region will continue to lead the way, but Europe is expected to improve its market share through the continued take-up of mobile messaging services.

As penetration of mobile phones with built-in camera increases in the market, even surpassing the sales of digital cameras, there will be opportunities for new services and applications that will take advantage of this growth.

Currently when a digital picture is taken with a mobile phone or a digital camera, the picture file is stored in the local memory with a non-descriptive name such as DSC00001 having no meaning for a user. A timestamp is attached to the pictures file-properties, but there is no indication of the location where the picture was taken. Usually, the pictures file-properties is in EXIF format (Exchangeable image file format for Digital Still Camera), The de-facto file format used in digital still cameras.

There are therefore no means of organizing the picture files except by creating different folders for the storing of picture files (in some phones). The usual way of organizing digital pictures is by place and time/date. Information such as, "when/where" is also an important part of the message following the picture in an email or MMS.

Several techniques have been used so far to add geographic information to pictures. Most of these techniques require use of GPS systems or other supplementary devices.

Geographical data can be relevant in many applications. A set of tags has been defined to record GPS-information (GPS IFD) in EXIF 2.1 picture attribute information. Using the GPS IFD, the picture can later be associated to a position on a graphical map or mapped to a meaningful place name. There are no tags dedicated to location names. In EXIF IFD Attribute Information we can use tags "user comments" or "MakerNote", but using the file name makes the name visible to the user.

In "ether GPS" (A MIT Media Lab project) the GPS tags are used to search for a meaningful place name in MetaCarta, a database where web-pages are indexed by their latitude and longitude. The project suggests a scenario with a camera-phone with an embedded GPS-receiver where the picture is given a meaningful name such as "fenway_park.jpg" or "baseball.jpg" indicating the content of the picture.

Accordingly, in order to give an adequate filename to a picture based on the location of the user taking the picture, "ether GPS" uses MetaCarta, which basically searches through all the web pages that include the address of the location returned by the GPS engine, and looks for the word that is most commonly used in these pages (e.g. example "baseball"). This method assumes that the terminal takes advantage of the unique GPS-position as an index to find associated web-pages with information that gives sense in a file-name. It could probably be useful in countries where a large number of location specific web-pages with associated geographical information is available, but it does not guarantee the same results in other countries that don't have the same amount of information published on the Internet.
There are cellular telephones available with embedded GPS but adoption in the mass market is unlikely. The price, physical size and battery consumption increases when a telephone is provided with a GPS device. At the same time, new methods for locating handsets in cellular networks are improving.

GPS is suited for use in open landscapes with no trees or high buildings shielding the satellite signals. This makes the GPS-technology unsuited for use in most situations where pictures are taken.

The patent application US-2002/0113757 A1 describes a method for displaying an image comprising; receiving image data associated with the image at a user equipment from a data communication system and generating a visual effect to be presented in association with the image. The main focus is visual effects based on contextual data. The application describes 21 types of contextual data, from importance of the image, via emotional feelings to location, which may be used as the basis for generating visual effects on the receiving mobile communication terminal. It also describes how location information can be retrieved from a GPS terminal or a location service provided by the cellular network. The application does not go into detail on the format of the location data, how the location information may be annotated to the picture, how the image may be stored. Also the application area is different.

### Object and summary of the invention

The main object of the present invention is to provide a meaningful filename for a picture taken with a mobile phone camera automatically. The file name describes the location where the picture was taken. The invention comprises also a method for organizing the pictures or the creation of a template for a digital postcard (MMS).

In order to achieve this object, location information provided by the cellular network is used to change the existing file name or to generate a new file name.

The invention comprises thus a method for storing digital image data acquired with a digital camera embodied on a mobile communication terminal, with a descriptive filename including information of the geographical location of where the digital image data was taken, said mobile communication terminal comprising memory, sender and receiver for connection to a localisation service via a communication network, where the method comprises the following steps:
- the communication terminal requests location information from the localisation service,
- the communication terminal receives location information from the localisation service,
- the communication terminal captures digital image data,
- the communication terminal generates a file name based on location information,
- the file name is assigned to the digital image data,
- the digital image data is stored in the communication terminal with said filename.

In the context of this application, the term "picture" is used to refer to a digital image data captured by a mobile communication unit. The skilled person will readily realize that the invention will also be applicable for other types of digital image data sets such as a video sequence or a scanned image captured by the mobile communication unit.

The file name obtained by means of the present invention comprises an indication of the location where the picture was taken.

The file name indicating the content of the picture is more appropriate for organizing pictures. Also the place name may be included in a digital postcard for example in the subject field of a MMS template.

In one embodiment, the invention comprises combining the location of the digital image data with a map of the relevant area, enabling the user to access the digital image data by navigating and clicking the map.

The invention comprises also a mobile communication terminal adapted for performing the above mentioned method and a computer program for enabling a mobile communication terminal to perform the above mentioned method.

According to the invention, the picture is automatically saved with a descriptive filename, and optionally uses a location specific MMS template for sending the picture.

Because location information is provided independently of signals interpreted by a special device, an increased market penetration of the service offered according to the inventive method is expected.

The invention facilitates the storage and administration of the user's pictures by giving them a comprehensible name and by storing the pictures in the internal memory of the telephone or externally in the form of diary or folders, e.g. Norway → Oslo → Frogner-Park.

The accuracy provided by the method according to the invention is directly related to a defined database related to the communication network and does not depend on the amount of information published on the Internet. The user has the possibility to further increase the accuracy of the location by selecting the match that best describes his location.

In contrast to GPS, where the accuracy usually is within 5-10 meters, the position measured from a cellular handset may vary and in many cases it is bounded to the area of the corresponding radio-base station. Still, it is sufficient for finding a name of the place of interest such as Drammen - Norway. New methods for locating handsets in cellular networks will improve the accuracy.

The invention solves a problem for the users by facilitating the storage and management of their picture files.

Operators can benefit from offering a Value Added Service. Operators can today help users save their pictures in albums on the network. "Intelligent" storing and organizing can become part of the album-service on the web. When pictures are saved in a uniform manner based on time and location the operator can develop context-based services around the web-site. Browsing pictures in an album can possibly trigger offers of other pictures from the same area, hotels and air-line tickets.

In the professional segment, digital pictures also have become an important part of everyday life. An automated when/where generated MMS might help real estate agents in the start process of property acquisition. A geo-tagged picture can be helpful in distance inspection and traveling service personnel.

### Detailed description of the invention

The invention will be described in further detail by reference to the figures, wherein:
Figure 1 shows the devices enabling the inventive method and their connection to each other.
Figure 2 is a flow chart of an embodiment of the invention.
Figure 3 is the data flow between a mobile communication terminal and the base station.
Figures 4 and 5 are flow charts of a detailed embodiment of the invention.
Figure 6 shows a folder structure for storage of pictures based on geographic information according to an embodiment of the invention.
Figure 7 illustrates an automatically generated digital postcard.

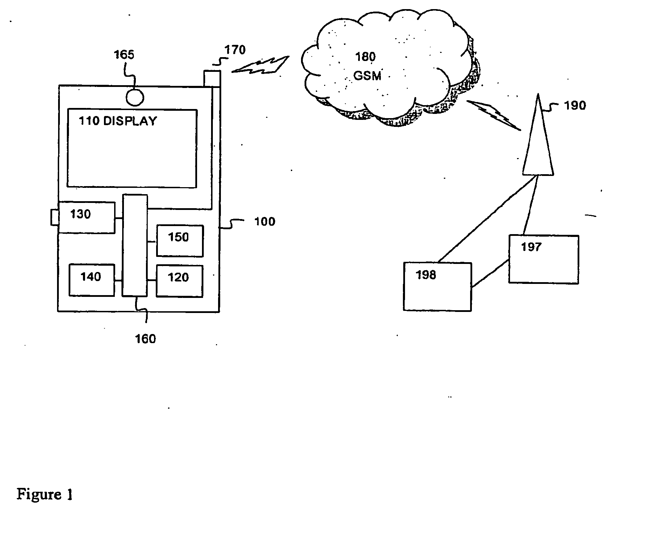

Figure 1 shows a mobile communication terminal 100, preferably a mobile phone with a built in camera 165, connected to a base station 190 via a communication network, e.g. a GSM network 180 with GPRS capabilities. The base station 190 is connected to a SMSC (Short Message Service Center) 195, which is in turn connected to a CPA (Content Provider Access) 197 further connected to a content provider server 198. These devices implement a localization service. The mobile communication terminal 100 comprises a display 110, memory 120, input means 130 (e.g. release buttons, keyboard, mouse), sender 140, receiver 150, main board 160, camera 165 and antenna 170. Mobile communication terminal 100 is in the illustrated embodiment of the invention implemented by means of a mobile phone and will thus comprise, in addition to the above mentioned elements all hardware to be found in a standard mobile phone. Memory 120 comprises software, that is, instructions which cause the mobile communication terminal 100 to operate according to the invention.

As mentioned before, the inventive method is preferably implemented by a computer program embodied on a storage medium or stored in a memory, e.g. in memory 120. The mobile communication terminal 100 may also be equipped with dedicated hardware performing the inventive method. If the method is implemented by a computer program, the program can be carried by a propagated signal and downloaded to a mobile communication terminal capable of performing the inventive method.

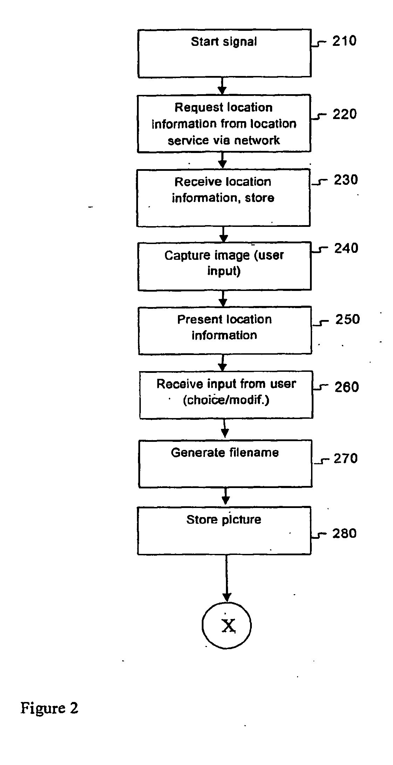

Figure 2 is a flow chart describing the different steps involved in the method according to the invention. In general terms, the method according to the invention comprises providing location information, providing a picture, generating a filename for said picture based on location information and optionally user input, and storing said picture with said filename in a catalogue.

The method starts when a triggering signal is received by the mobile communication terminal (step 210). This signal can be given automatically when the communication device is activated (the mobile phone is turned on) or manually by the user via input means 130 (for example a release button).

In step 220 location information is requested by the communication terminal 100 from a localization service via a communication network. Localisation service comprises, as mentioned earlier and among other devices, content provider server 198, and base station 190. Base station 190 is currently operatively connected to the mobile communication terminal 100.

The connection between communication terminal 100 and the localization service can be set up through a GSM network 180 with GPRS capabilities, but is not restricted to this type of network. In step 220 a message is sent from the mobile communication terminal 100 through the SMSC 195 (Short Message Service Center) to CPA 197 (Content Provider Access). The message is forwarded to the content provider server 198. The content provider server 198 asks CPA 197 for the geographic positioning of the user. A positioning service operatively connected to the CPA 197 tracks the mobile communication terminal 100 and sends geographic data indicating e.g. latitude/longitude, county, place and municipality back to CPA 197. CPA 197 forwards the information from the positioning service to the content provider server 198. The content provider server 198 receives the location data, finds the possible location names, adds the names to the message, and then returns location information to CPA 197. For clarity, the devices (190, 195, 197, 198) and software necessary for receiving the request from the communication terminal and providing the location information are denoted as a whole "localization service".

In step 230 the mobile communication terminal receives location information from the localization service. Said location information can comprise several relevant location names.

In step 240, a picture is captured by means of camera 165 and the input means (e.g. a release button) in the mobile communication terminal 100.

In step 250, the location information acquired in step 230, comprising one or more location name(s) is presented to the user on the display 110.

In step 260, input from the user sent by input means 130 is received. If more than one location name are presented, the user's input comprises choice of one (or several) of the alternatives presented on display 110.

In step 270 a file name is generated based on input received from the user in step 260. Said file name is generated based on user input and location information.

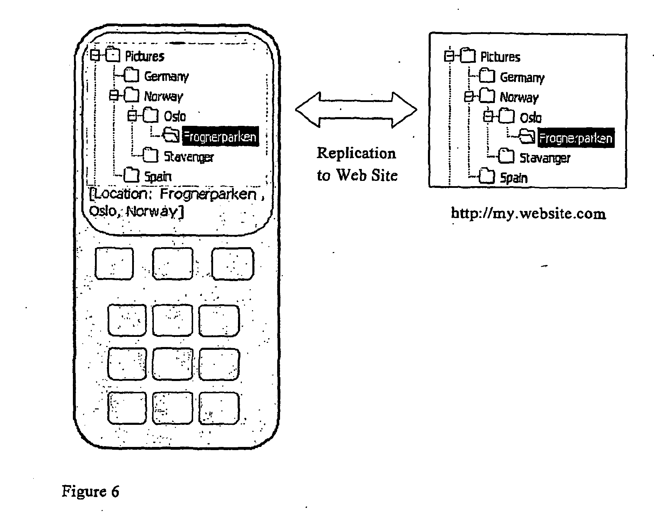

In step 280, the picture captured in step 240 is stored with a relevant location name in the memory 120 of the mobile communication terminal 100. The file name can also contain other information, e.g. time and date. For a mobile communication terminal 100 with the ability to store pictures in a catalog structure the picture can be stored in a catalogue which is automatically assigned to the picture based on the location name and/or the file name. In this way pictures from the same location will be stored in the same catalog as it is shown in Figure 6.

Although the method according to the invention has been described as comprising acquisition of location information prior to capturing a picture, it is also possible to exchange the sequence of these steps, that is, to capture a picture by means of the camera 165 and the input means 130 and thereafter to require and receive location information.

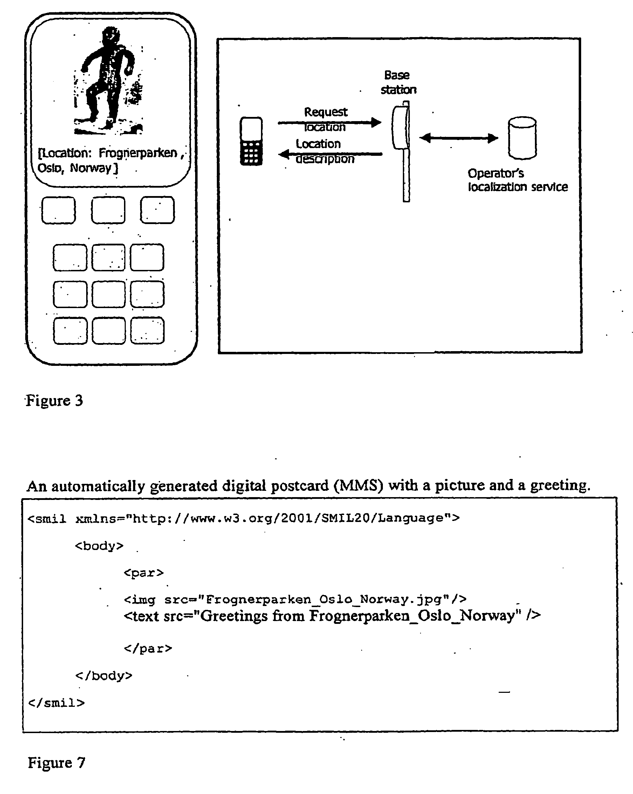

Figure 3 illustrates the data flow between a mobile communication terminal and the localization service (steps 220 and 230 in figure 2), together with a picture taken in Frognerparken in Oslo, Norway. The picture is annotated with the location.

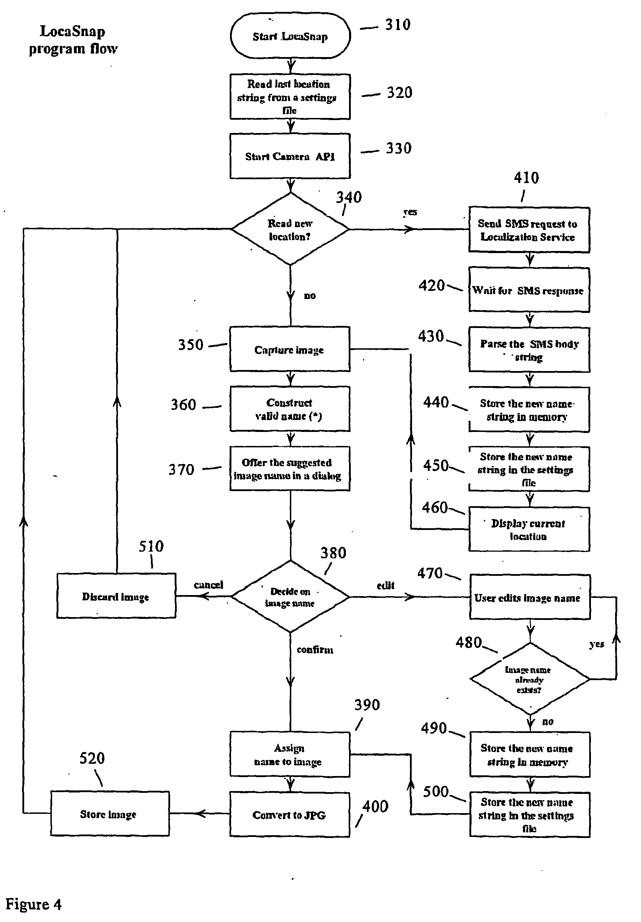

Figure 4 illustrates the method according to the invention by means of a detailed example. As mentioned above, the inventive method is implemented by a computer program stored in memory 120 (fig. 1).

In step 310 a trigger signal is received by the mobile communication terminal 100 from input means 130.

In step 320 a last location string is read from a settings file, this string can be a start-up setting stored in memory 120 or a location string obtained by an earlier run of the method.

In 330, a camera application is started.

In step 340 a user input is received via input means 130 regarding whether a new location is to be read or not. If the user is in a location corresponding to the last location string read in step 320, it is not necessary to read a new location. If the user is at a different location than what is cited in the last location string, a location name acquisition process must be started. In one embodiment of the invention the last location string is presented by means of display 110 and an input is required from the user.

If a new location is not to be read, the process goes to step 350, where a picture is captured (by means of camera 165 and optionally input means 130).

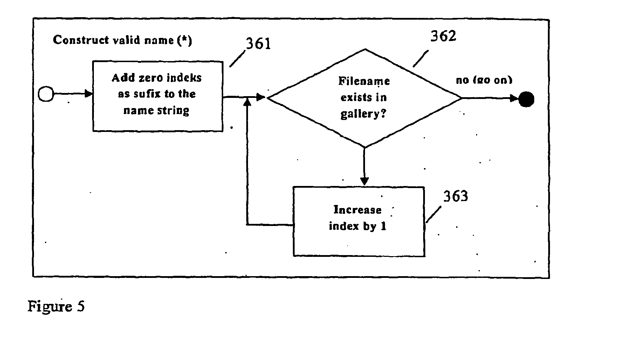

In step 360 a temporary file name is generated (this is shown in detail in figure 5).

In step 370 the temporary file name is shown by means of display 110 and an input from the user is required.

In step 380 an input is received from the user regarding whether the temporary file name is accepted (step 390), the picture is discarded (step 510) or the picture name is to be edited (step 470).

If the temporary file name is accepted (step 390), a name string (comprising or based on the file name) is assigned to the picture. The process continues in step 400, where the picture is converted to JPG format (step 400).

In step 520 the picture with the accepted filename is stored.

If, in step 380, the picture is discarded (step 510) the process continues to step 340 where an input is received regarding whether a new location is read or not.

If the temporary file name is to be edited, input from the user is received in step 470.

In step 480 a check is performed as to whether the file name already exists. If this is the case, an error message is displayed in display 110 (optionally) and the process goes back to editing the temporary file name (step 470).

If this is not the case, a new name string comprising or based on the file name is stored in memory (step 490) and in the settings file (step 500). After this the process goes to step 390.

If a new location is to be read (decision step 340), in step 410 the mobile communication terminal 100 sends a request to localization service. In this particular embodiment of the invention, said request is in the form of an SMS.

In step 420 the mobile communication terminal awaits a response from the localization service.

In step 430 a response is received at the mobile communication terminal and an SMS body string is parsed to generate a new name string.

In steps 440 and 450 the new name string is stored in the memory and in the settings file.

In step 460 the current location is displayed by means of display 110. From this point, the process goes to step 350.

Figure 5 shows step 360 "generating temporary valid name" in further detail. In step 361 a zero index is added to the name string and a new file name string is created. In step 362 a control is made as to whether the file name (or name string) created in step 361 already exists. If this is the case, the index is increased by one (step 363) and the process goes back to step 361.

Figure 6 shows a folder structure for storage of pictures based on location information. The invention describes a method for storing pictures in the memory of a mobile communication terminal, and this method could be broadened in to an external storage of the pictures in a personal website. The folder structure will be replicated to a website where the picture files are stored in the same order as it is shown in Figure 4.

Figure 7 shows an XML code for generation of a digital postcard automatically in the mobile communication terminal, where the postcard comprises location information provided by the communication network.

The inventive method can be further enhanced by incorporating RFID technology. When mobile phones with RFID readers become more popular; RFID tags will be able to increase the accuracy of the user's location. The mobile communication terminal will comprise an RFID receiver. The user will then be able to read a tag at a specific location and the ID number will not only identify the location, but also a specific object or area.

## Claims

1. Method for storing digital image data acquired with a digital camera embodied on a mobile communication terminal, with a descriptive filename including information of the geographical location of where the digital image data was taken, said mobile communication terminal comprising memory, sender and receiver for access to a localisation service via a communication network, and said method comprising the following steps:
a) the communication terminal requests location information from the localisation service,
b) the communication terminal receives location information from the localisation service, said location information being based on the mobile communication terminal's location,
c) the communication terminal captures digital image data,
d) the communication terminal generates a file name based on said location information,
e) said file name is assigned to the digital image data,
f) said digital image data is stored in the communication terminal with said file name.

2. Method according to claim 1, wherein the communication terminal comprises input devices and a display device, and step d) comprises generating at least one temporary file name, presenting the at least one temporary file name to a user by means of said display device, receiving input from said input device, and generating said file name based on said location information and said input.

3. Method according to any of the preceding claims further comprising the step of:
g) combining the location of the digital image data taken with a map of the relevant area, enabling a user to access the digital image data by navigating and clicking the map.

4. Method according to any of the preceding claims further comprising the step of:
h) receiving additional location information from RFID tags to increase the accuracy of the location determination, and to receive additional information about objects photographed.

5. Method according to claim 4, comprising storing the additional information at the mobile communication terminal together with the digital image data.

6. Mobile communication terminal comprising a camera, a display, a memory, an input device, a sender and a receiver for communication to a communication network **characterized in that** the mobile communication terminal is arranged to perform a method according to claims 1-5.

7. Computer program, embodied on a storage medium or in a memory, or carried by a propagated signal, for execution by a processing device in a mobile communication terminal, **characterized in that** the program comprises a set of instructions arranged to perform a method according to one of the claims 1-6 when executed by a mobile communication terminal.

## Patentansprüche

1. Verfahren zum Speichern von digitalen Bilddaten, welche durch eine digitale Kamera erlangt sind, welche an einem Mobilkommunikations-Endgerät ausgeführt ist, mit einem beschreibenden Dateinamen, welcher eine Information hinsichtlich des geografischen Ortes, bei welchem die digitalen Bilddaten aufgenommen wurden, enthält, wobei das Mobilkommunikations-Endgerät einen Speicher, einen Übertrager und einen Empfänger zum Zugriff auf einen Lokalisationsdienst über ein Kommunikationsnetzwerk enthält, und wobei das Verfahren die folgenden Schritte enthält:
a) Das Kommunikations-Endgerät fragt eine Ortsinformation von dem Lokalisationsdienst ab,
b) das Kommunikations-Endgerät empfängt die Ortsinformation von dem Lokalisationsdienst, wobei die Ortsinformation auf dem Ort des Mobilkommunikations-Endgeräts basiert,
c) das Kommunikations-Endgerät nimmt digitale Bilddaten auf,
d) das Kommunikations-Endgerät erzeugt basierend auf der Ortsinformation einen Dateinamen,
e) der Dateiname wird den digitalen Bilddaten zugewiesen,
f) die digitalen Bilddaten werden mit dem Dateinamen im Kommunikations-Endgerät gespeichert.

2. Verfahren nach Anspruch 1, bei welchem das Kommunikations-Endgerät Eingabevorrichtungen und eine Anzeigevorrichtung enthält, und wobei Schritt d) ein Erzeugen von zumindest einem temporären Dateinamen, ein Darstellen des zumindest einen temporären Dateinamens mittels der Anzeigevorrichtung an einen Benutzer, ein Empfangen von einer Eingabe von der Eingabevorrichtung, und ein Erzeugen des Dateinamens basierend auf der Ortsinformation und der Eingabe, enthält.

3. Verfahren nach einem der vorangehenden Ansprüche, welches ferner den Schritt enthält:
g) Zusammenfassen des Ortes, wo die digitalen Bilddaten aufgenommen sind, mit einer Karte des relevanten Gebiets, wodurch es einem Benutzer ermöglicht wird, durch ein Navigieren und ein Anklicken der Karte auf die digitalen Bilddaten zuzugreifen.

4. Verfahren nach einem der vorangehenden Ansprüche, welches ferner den Schritt enthält:
h) Empfangen von einer zusätzlichen Ortsinformation von RFID-Kennzeichen, um die Genauigkeit der Ortsbestimmung zu erhöhen und eine zusätzliche Information über fotografierte Objekte zu empfangen.

5. Verfahren nach Anspruch 4, welches ein Speichern der zusätzlichen Information am Mobilkommunikations-Endgerät zusammen mit den digitalen Bilddaten enthält.

6. Mobilkommunikations-Endgerät, welches eine Kamera, eine Anzeige, einen Speicher, eine Eingabevorrichtung, einen Übertrager und einen Empfänger zur Kommunikation mit einem Kommunikationsnetzwerk enthält, **dadurch gekennzeichnet, dass** das Mobilkommunikations-Endgerät dazu ausgelegt ist, ein Verfahren nach einem der Ansprüche 1 bis 5 durchzuführen.

7. Computerprogramm, welches auf einem Speichermedium oder in einem Speicher ausgeführt ist oder über ein Übertragungssignal übertragen ist, zur Ausführung durch eine Verarbeitungsvorrichtung in einem Mobilkommunikations-Endgerät, **dadurch gekennzeichnet, dass** das Programm einen Satz von Instruktionen enthält, welche dazu ausgelegt sind, ein Verfahren nach einem der Ansprüche 1 bis 6, wenn durch ein Mobilkommunikations-Endgerät ausgeführt, durchzuführen.

## Revendications

1. Procédé pour stocker des données d'image numérique acquises avec un appareil photo numérique incorporé sur un terminal de communication mobile, avec un nom de fichier descriptif incluant des informations de la localisation géographique d'où les données d'image numérique ont été prises, ledit terminal de communication mobile comprenant une mémoire, un émetteur et un récepteur pour l'accès à un service de localisation via un réseau de communication, et ledit procédé comprenant les étapes suivantes :
a) le terminal de communication demande des informations de localisation au service de localisation,
b) le terminal de communication reçoit des informations de localisation en provenance du service de localisation, lesdites informations de localisation étant basées sur la localisation du terminal de communication mobile,
c) le terminal de communication capture des données d'image numérique,
d) le terminal de communication génère un nom de fichier sur la base desdites informations de localisation,
e) ledit nom de fichier est assigné aux données d'image numérique,
f) lesdites données d'image numérique sont stockées dans le terminal de communication avec ledit nom de fichier.

2. Procédé selon la revendication 1, dans lequel le terminal de communication comprend des dispositifs d'entrée et un dispositif d'affichage, et l'étape d) comprend la génération d'au moins un nom de fichier temporaire, la présentation du au moins un nom de fichier temporaire à un utilisateur au moyen dudit dispositif d'affichage, la réception d'une entrée en provenance dudit dispositif d'entrée, et la génération dudit nom de fichier sur la base desdites informations de localisation et de ladite entrée.

3. Procédé selon l'une quelconque des revendications précédentes, comprenant en outre l'étape consistant à :
g) combiner la localisation des données d'image numérique prises avec une carte de la zone pertinente, permettant à un utilisateur d'accéder aux données d'image numérique en navigant et en cliquant sur la carte.

4. Procédé selon l'une quelconque des revendications précédentes, comprenant en outre l'étape consistant à :
h) recevoir des informations de localisation additionnelles en provenance d'étiquettes RFID pour augmenter la précision de la détermination de localisation, et pour recevoir des informations additionnelles concernant des objets photographiés.

5. Procédé selon la revendication 4, comprenant le stockage des informations additionnelles sur le terminal de communication mobile conjointement avec les données d'image numérique.

6. Terminal de communication mobile comprenant un appareil photo, un afficheur, une mémoire, un dispositif d'entrée, un émetteur et un récepteur pour la communication vers un réseau de communication, **caractérisé en ce que** le terminal de communication mobile est agencé pour effectuer un procédé selon les revendications 1 à 5.

7. Programme informatique, incorporé sur un support de stockage ou dans une mémoire, ou acheminé par un signal propagé, pour l'exécution par un dispositif de traitement dans un terminal de communication mobile, **caractérisé en ce que** le programme comprend un jeu d'instructions agencé pour effectuer un procédé selon l'une des revendications 1 à 6 lorsqu'il est exécuté par un terminal de communication mobile.
